# EUROPÄISCHE PATENTSCHRIFT

(11) **EP 1 718 549 B1**
(45) Veröffentlichungstag und Bekanntmachung des Hinweises auf die Patenterteilung: **26.05.2010**
(21) Anmeldenummer: 05707410.6
(22) Anmeldetag: 16.02.2005
(51) Int. Cl.: B65G 57/04, B65B 5/06, B65B 19/00

(54) **VORRICHTUNG ZUM HERSTELLEN UND PALETTIEREN VON KARTONPACKUNGEN**
DEVICE FOR PRODUCING AND PALLETING PACKAGING BOXES
DISPOSITIF DE FABRICATION ET DE PALETTISATION D'EMBALLAGES CARTON

(30) Priorität: 25.02.2004 DE 102004009584
(43) Veröffentlichungstag der Anmeldung: 08.11.2006
(73) Patentinhaber: Focke & Co. (GmbH & Co. KG), 27283 Verden (DE)
(72) Erfinder: SCHULTE, Josef, 26871 Aschendorf (DE); PRAHM, Andreas, 26676 Barssel (DE); GUSS, Horst, 27308 Luttum (DE)
(74) Vertreter: Bolte, Erich
(86) Internationale Anmeldenummer: PCT/EP2005/001530
(87) Internationale Veröffentlichungsnummer: WO 2005/080239

(56) Entgegenhaltungen:
- EP-A- 0 639 503
- US-A- 4 566 836
- US-A- 4 566 836
- US-A- 4 951 445
- US-A- 5 426 921
- US-B1- 6 290 448
- US-B1- 6 477 819

## Beschreibung

Die Erfindung betrifft eine Vorrichtung zum Herstellen und versandfertigen Bereitstellen von Kartonpackungen aus Faltkartons für jeweils eine Mehrzahl von Gegenständen, insbesondere von als Packungsgruppe formierten Gebindepackungen, die im Bereich einer Packstatio in den seitwärts offenen Faltkarton einführbar sind, wobei der gefüllte Faltkarton entlang einer geradlinigen, horizontalen Bewegungsbahn aufeinanderfolgend einer Schließstation und einer Palettierstation zuführbar und in dieser auf einer Kartonaufnahme absetzbar sind zur Übergabe an eine seitwärts neben der Kartonaufnahme positionierte Palette durch einen in der Palettierstation angeordneten Portalroboter.

Bei einer bekanten Einrichtung zum Füllen, Verschließen und Palettieren von Kartonpackungen (US 5 426 921 A) werden aufgerichtete Kartonzuschnitte in einen Revolver mit vier verteilt angeordneten Aufnahmen eingeführt. Gruppen von Gegenständen werden achsparallel zum Revolver in jeweils einen seitlich offenen Karton eingeführt. Dieser wird in weiteren Stationen des Revolvers verschlossen und verklebt. Der fertiggestellte Karton wird auf einem Abförderer abgelegt und insbesondere einer Anlage zum Kartonieren zugeführt. In deren Bereich werden die Kartons durch einen Vertikalförderer einer auf erhöhter Ebene angeordneten Palettierstation zuführt. Diese weist einen Deckenförderer auf, der jeweils einen Karton mittels Hubkopf erfasst und einer von mehreren Paletten zuführt sowie auf dieser absetzt. Eine derartige Anlage ist umfänglich und kompliziert. Ein Einsatz in Verbindung mit einer Verpackungsmaschine bzw. Verpackungslinie ist nicht geeignet.

Bei einer einfacheren Palettiervorrichtung für Kartons (US 4 566 836 A) werden die aufgerichteten Kartonzuschnitte ebenfalls über eine offenen Seite befüllt, durch Bewegung entlang winkelförmiger Bewegungsbahn durch eine Verschlussstation und eine Verklebungsstation hindurch gefördert. Schließlich werden die fertigen Kartons auf einer Wendestation abgesetzt, um 90° gedreht und in den Aufnahmebereich für einen Hubförderer transportiert. Dieser erfasst den Karton und setzt diesen auf einer unterhalb eines Auslegerarms des Hubförderes angeordneten Palette ab. Dieser Kartonierer ist zwar kompakt aufgebaut, weist aber eine komplexe Verschachtelung der einzelnen Funktionsstationen auf, die in verschiedenen Ebenen übereinander sowie nebeneinander angeordnet sind.

Bei einer weiteren bekannten Kartoniervorrichtung (US 4 951 445 A) werden oben offene Kartons im Bereich eines um eine vertikale Achse drehenden Tisches von oben mit Füllgut versehen, sodann verschlossen und durch eine oberhalb der Kartons an einem Ausleger angeordnete Leimorgane verleimt. Danach werden die Kartons von dem drehbaren Tisch abgeschoben und auf einer benachbarten Palette abgesetzt. Bei dieser Vorrichtung geht es um die Leimstation ohne detaillierte Darstellung von gesonderten, aufeinander folgenden Arbeitsstationen.

Der Erfindung liegt die Aufgabe zugrunde, eine Palettiervorrichtung vorzuschlagen, die im Aufbau einfach und übersichtlich gestaltet ist und einen einfachen, wirksamen Arbeitsablaut gewährleistet.

Zur Lösung dieser Aufgabe ist eine Vorrichtung gemäß Anspruch 1 vorgesehen wobei:
a) zu beladende, leere Paletten sind quer zur Zuförderrichtung des Kartons im Bereich der Palettierstation bewegbar,
b) die leeren Paletten sind in einer Zuförderebene unterhalb der Kartonaufnahme in eine Beladestellung neben der Kartonaufnahme verschiebbar,
c) nach Beladung der Palette ist diese in derselben Richtung aus der Palettierstation herausbewegbar.

Die Handhabung der Kartons, nämlich die Befüllung, der Verschluss und die Positionierung der fertigen Kartons ist mit der Handhabung der Paletten abgestimmt. Letztere werden in einer Bewegungsbahn quer zur Bewegungsbahn der Kartons transportiert, und zwar mit einer besonderen Zuführung von leeren Paletten.

Ein Ausführungsbeispiel der erfindungsgemäßen Einrichtung wird nachfolgend anhand der Zeichnungen näher beschrieben. Es zeigt:
- Fig. 1: die Vorrichtung zum Herstellen und Palettieren von Kartonpackungen im Grundriss,
- Fig. 2.: die Vorrichtung gemäß Fig. 1 in einer Queransicht entsprechend Ebene II-II in Fig. 1,

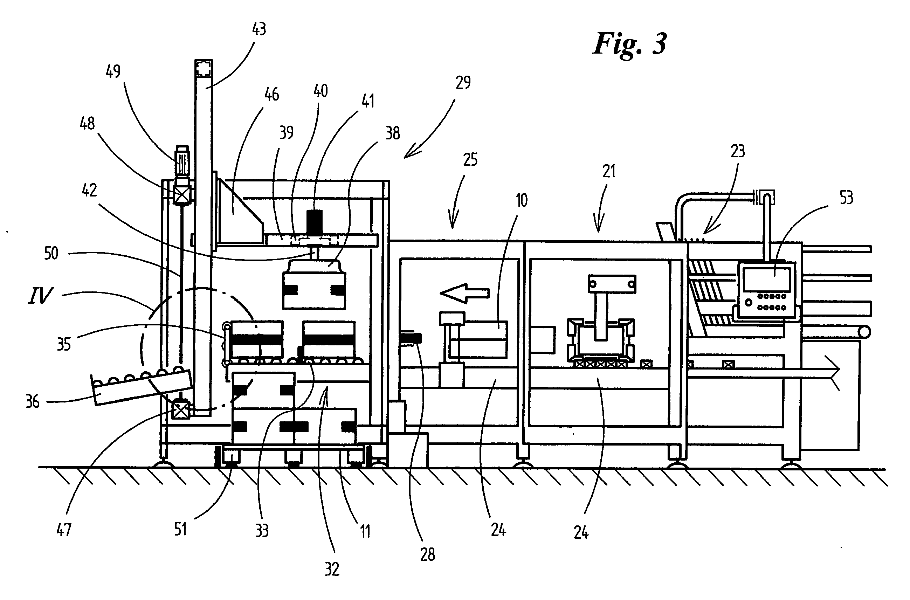

- Fig. 3: eine Seitenansicht der Gesamtvorrichtung entsprechend Sichtebene III-II in Fig. 1,
- Fig. 4: eine Einzelheit der Fig. 3 im Bereich einer Palettenstation entsprechend Ausschnitt IV der Fig. 3 in vergrößertem Maßstab,
- Fig. 5: die Einzelheit gemäß Fig. 4 bei veränderter Funktion der Vorrichtung.

Bei dem Ausführungsbeispiel in den Zeichnungen geht es um die Herstellung von Großpackungen für Zigaretten, nämlich Kartons 10 und um die Bereitstellung derselben für den Versand durch Anordnen einer Mehrzahl von Kartons 10 auf einer Palette 11.

Inhalt der Kartons 10 sind Gebindepackungen 12 für Zigaretten, sogenannte Zigaretteristangen. In der Praxis werden die Gebindepackungen 12 von einem Gebindepacker kommend auf einem Zuführförderer 13 angeliefert. Die Gebindepackungen 12 gelangen durch diesen in den Bereich eines Kartonpackers 14. Dieser besteht aus mehreren Einheiten, die konstruktiv zusammengefasst sind, und zwar durch Traggestelle aus Längsträgern 15, Querträgern 16 und aufrechten Stützen 17. Eine im Funktionsablauf erste Einheit ist eine Gruppierstation 18. Der Zuführförderer 13 mündet im Bereich derselben. Aus den Gebindepackungen 12 wird eine Packungsgruppe 19 zusammengestellt. Diese wird als Inhalt eines Kartons 10 durch einen Schieber 20 aus dem Bereich der Gruppierstation 18 abgeschoben in eine Packstation 21.

In der Packstation 21 wird ein teilweise gefalteter, in eine dreidimensionale Form aufgerichteter Karton 10 bereitgehalten, und zwar mit einer offenen Seite zur Gruppierstation 18 gerichtet. Faltlappen 22 des Kartons 10 befindet sich in ungefalteter, offener Position, sodass die Packungsgruppe 19 als Einheit in den hülsenartig gefalteten Karton 10 eingeschoben werden kann.

Teil der Packstation 21 ist ein Zuschnittmagazin 23. Dieses besteht aus einer Mehrzahl von flach zusammengelegten als Faltschlauch vorbereiteten Zuschnitten für Kartons 10. Nacheinander werden die Zuschnitte dem Zuschnittmagazin 23 entnommen, aufgerichtet und in der Packstation 21 in der gezeigten Weise bereitgehalten.

Nach dem Einführen einer Packungsgruppe 19 in den Karton 10 wird dieser durch einen Förderer 24 aus der Packstation 21 abgefördert in dem Bereich einer Schließstation 25. Auf dem Transportweg werden die Faltlappen 22 durch Faltorgane 26 umgefaltet, und zwar in seitwärts gerichtete Schließebenen des Kartons 10. In der Schließstation 25 werden die Faltlappen 22 in der Schließstellung fixiert, bei dem vorliegenden Ausführungsbeispiel durch Klebebänder 27, die an den benachbarten Faltlappen 22 durch zu beiden Seiten der Bewegungsbahn der Kartons 10 angebrachte Bandgeber 28 aufgebracht werden. Die Kartons 10 sind nun gefüllt und verschlossen, können also in den Versand gegeben werden.

Die Kartons 10 werden im Anschluss an die Packstation 21 bzw. im Anschluss an die Schließstation 25 in eine Palettierstation 29 eingeführt. Diese bildet eine apparative Einheit mit Packstation 21 und/oder Schließstation 25. Ein Traggestell aus Längsträgern 30 und Querträgern 31 ist mit dem entsprechend ausgebildeten Traggestell der Nachbareinheit verbunden.

Die von der Schließstation 25 kommenden Kartons 10 werden auf eine Kartonaufnahme 32 gefördert und hier abgesetzt. Die Kartonaufnahme 32 besteht aus einem Förderer, und zwar aus einem Abschnitt einer Rollenbahn 33. Diese ist so ausgebildet, dass mehrere, nämlich (mindestens) zwei Kartons 10 in Förderrichtung aufeinanderfolgend auf der Kartonaufnahme 32 bereitgehalten werden können. Die Stellung der beiden Kartons 10 wird durch Anschläge bestimmt, und zwar zum einen durch einen mittleren Anschlag 34, der als auf- und abbewegbarer Quersteg in die Bewegungsbahn der Kartons 10 eintritt und die Endposition des zweiten Kartons 10 bestimmt. Am Ende der Kartonaufnahme 32 bzw. der Rollenbahn 33 ist ein ebenfalls bewegbarer Endanschlag 35 vorgesehen als Anlage für den zuerst auf die Kartonaufnahme 32 geförderten Karton 10.

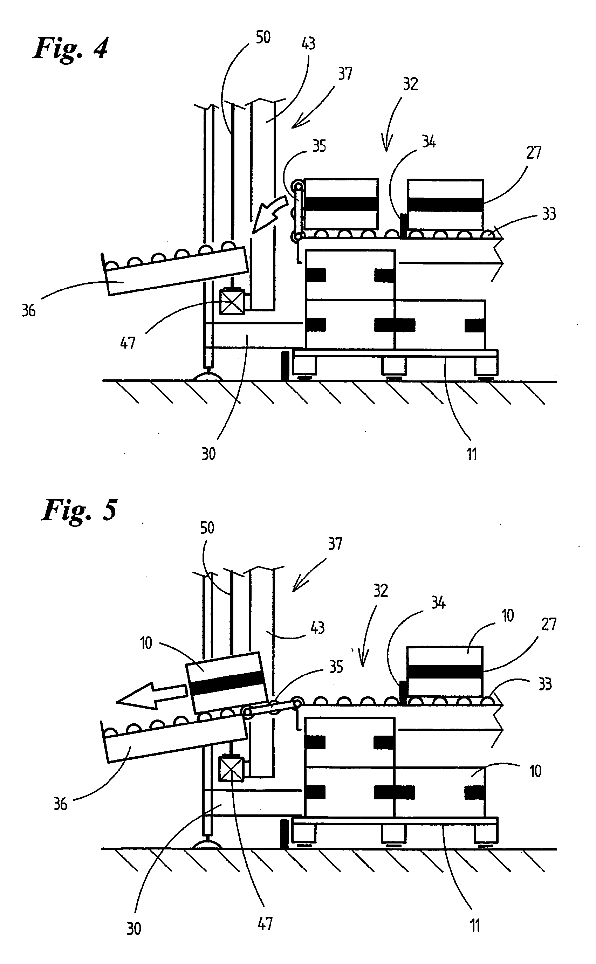

Der Endanschlag 35 ist in besonderer Weise ausgebildet und hat eine Doppelfunktion. Es handelt sich dabei um ein Bahnstück, nämlich um einen schwenkbaren Abschnitt der Rollenbahn 33. In der Funktion als Endanschlag 35 ist dieser Bahnabschnitt aufgerichtet (Fig. 4). In einer anderen Stellung (Fig. 5) bildet der Endanschlag 35 eine Fortsetzung der Kartonaufnahme 32 bzw. der Rollenbahn 33, und zwar als Brücke zu einer Abförderbahn 36. Diese ist hier ebenfalls als Rollenbahn ausgebildet und schräg abwärts gerichtet. Die Abförderbahn 36 eröffnet in Verbindung mit dem als Bahn ausgebildeten Endanschlag 35 die Möglichkeit, Kartons durch die Palettierstation 29 hindurchzufördern, z. B. identifizierte Fehlpackungen oder bei zeitweiliger Betriebsunterbrechung der Palettierstation 29.

Die Palettierstation 29 ist im Ablauf der Hauptfunktion quergerichtet zur Packstation 21 und Schließstation 25. Ein Hubförderer, nämlich ein Portalroboter 37, erfasst jeweils einen Karton 10 im Bereich der Kartonaufnahme 32. Durch Anheben, Querbewegen und Absetzen auf einer Palette 11 neben der Kartonaufnahme 32 wird die Palette 11 beladen.

Zur Handhabung der Kartons 10 im Bereich der Palettierstation 29 ist der Portalroboter 37 hinsichtlich Aufbau und Funktion in besonderer Weise ausgebildet. Ein Hubkopf 38, insbesondere ein Saugkopf, erfasst jeweils einen Karton 10 an dessen Oberseite. Der Hubkopf 38 ist an einem Tragarm 39 angebracht, der als Kragarm an einem Tragwerk gelagert ist. Der Tragarm 39 erstreckt sich über die voll Breite einer durch die Paletten 11 bestimmten Grundfläche der Palettierstation 29. Der Hubkopf 38 ist mit einem Fahrwerk 40 in Längsrichtung des Tragarms 39 bewegbar. Des Weiteren ist der Hubkopf 39 an einer durch Motor 41 drehbaren aufrechten Tragstange 42 angebracht, sodass die vom Hubkopf 38 erfassten Kartons 10 um eine vertikale Achse drehbar sind.

Der Tragarm 39 ist auf- und abbewegbar gelagert, und zwar an einer aufrechten Tragsäule 43. Zu diesem Zweck ist der Tragarm 39 an einem Fahrgestellt 44 angebracht, welches an der Tragsäule 43 verfahren werden kann, und zwar durch einen Motor 45 über ein (endloses) Zugorgan, wie Zahnriemen. Der Tragarm 39 ist über ein besonderes Tragwerk, nämlich mittels Eckstück 46 mit dem Fahrgestell 44 verbunden, um die einseitig wirkenden Lasten des Tragarms 39 problemlos auf das Fahrgestell 44 und damit auf die Tragsäule 43 zu übertragen.

Die aufrechte Tragsäule 43 ist ihrerseits in horizontaler Richtung verfahrbar, und zwar entlang einer geradlinigen Bewegungsbahn neben den zu beladenden Paletten 11. An einer Längsseite der rechteckigen Palettierstation 29 sind ein unterer Tragbalken 47 und ein oberer Tragbalken 48 feststehend angebracht, insbesondere durch (nicht gezeigte) Verbindung mit dem Maschinengestell, z. B. mit Längsträgern der Palettierstation 29. Die Tragsäule 43 ist mit dem unteren Tragbalken 47 und dem oberen Tragbalken 48 verbunden, derart, dass die Tragsäule 43 an den beiden Tragbalken 47, 48 verfahrbar ist. Bei aufgerichteter Stellung des Endanschlags 35 kann der Portalroboter 37, nämlich die Tragsäule 43, bis in den Bereich der Kartonaufnahme 32 verfahren werden.

Für den Antrieb dient ein am oberen Tragbalken 48 angeordneter Motor 49, der ein Antriebsmittel innerhalb des (hohlen) Tragbalkens 48 und über eine aufrechte Welle 50 ein Antriebsorgan im unteren Tragbalken 47 antreibt. Es handelt sich dabei vorzugsweise jeweils um Riemen, insbesondere Zahnriemen, die innerhalb der Tragbalken 47, 48 über deren Länge verlaufen und an denen eine mit der Tragsäule 43 verbundene und mit dieser verfahrbare Führung angebracht ist. Durch den so ausgebildeten Hubförderer bzw. Portalroboter 37 kann bei kurzen Transportwegen jeder Karton 10 auf der Kartonaufnahme 32 erfasst und an erwünschter Position auf der Palette 11 abgesetzt werden. Die Kartons 10 sind, wie ersichtlich, in mehreren Lagen übereinander auf einer Palette positioniert.

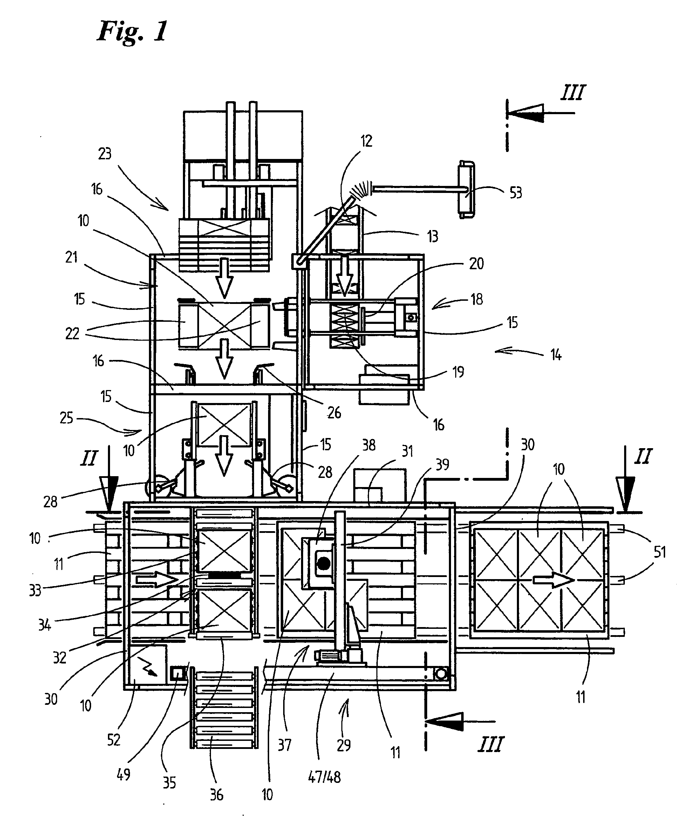

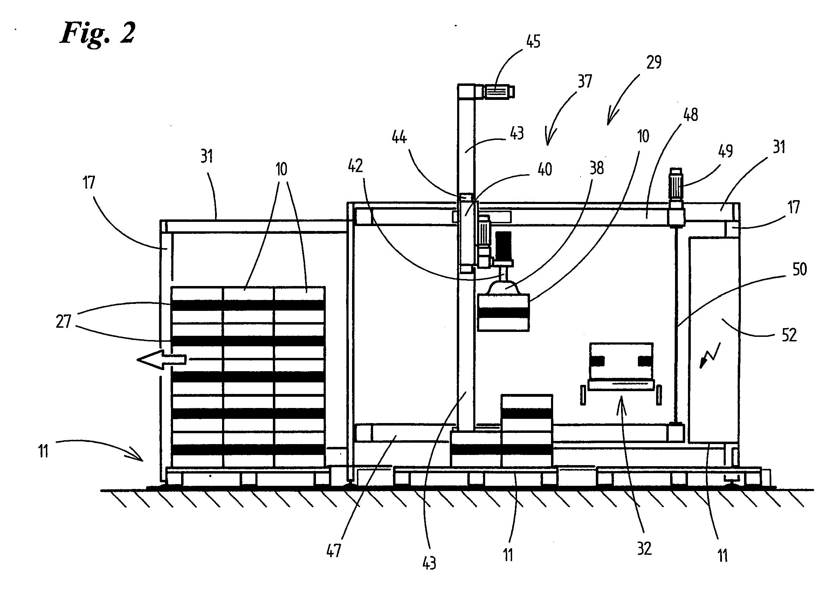

Die Paletten 11 werden in einer zur Förder- und Bereithaltungsebene der Kartons 10 nach unten versetzten Ebene zugeführt und bereitgehalten. Die leeren Paletten 11 werden auf der einen Seite (links in Fig. 1) auf schienenartigen Unterlagen 51 in den Bereich der Palettierstation 29 eingeführt und unter der Kartonaufnahme 32 hinweg in eine Beladeposition neben der Kartonaufnahme 32 verfahren. Die Abmessungen sind so gewählt, dass neben der Palette 11 in der Beladestellung eine weitere leere Palette 11 bereitgehalten wird (Fig. 2). Die beladene Palette wird anschließend aus der Beladestellung in derselben Bewegungsrichtung (Pfeile) weitertransportiert aus dem Bereich der Palettierstation 29 heraus, insbesondere zur Aufnahme durch ein geeignetes Transportgerät (nicht gezeigt).

Die Vorrichtung zeichnet sich durch kompakten Aufbau aus, insbesondere auch durch das L- bzw. U-förmige Layout. Die zu einer gemeinsamen Vorrichtung zusammengefassten Einheiten sind an eine gemeinsame Steuerung angeschlossen, insbesondere auch an einen gemeinsamen Schaltschrank 52 für die elektrischen und elektronischen Steuereinheiten. Die Gesamtheit der Vorrichtung ist durch ein gemeinsames Steuergerät 53 mit Bildschirm bedienbar. Bei dem Steuergerät 53 kann es sich um einen standardmäßigen (Industrie-)PC handeln, der die Funktionen der Teilaggregate der Vorrichtung steuert.

### Bezugszeichenliste

- 10: Kartons
- 11: Palette
- 12: Gebindepackung
- 13: Zuführförderer
- 14: Kartonpacker
- 15: Längsträger
- 16: Querträger
- 17: Stützen
- 18: Gruppierstation
- 19: Packungsgruppe
- 20: Schieber
- 21: Packstation
- 22: Faltlappen
- 23: Zuschnittmagazin
- 24: Förderer
- 25: Schließstation
- 26: Faltorgane
- 27: Klebebänder
- 28: Bandgeber
- 29: Palettierstation
- 30: Längsträger
- 31: Querträger
- 32: Kartonaufnahme
- 33: Rollenbahn
- 34: Anschlag
- 35: Endanschlag
- 36: Abförderbahn
- 37: Portalroboter
- 38: Hubkopf
- 39: Tragarm
- 40: Fahrwerk
- 41: Motor
- 42: Tragstange
- 43: Tragsäule
- 44: Fahrgestell
- 45: Motor
- 46: Eckstück
- 47: Tragbalken
- 48: Tragbalken
- 49: Motor
- 50: Welle
- 51: Unterlage
- 52: Schaltschrank
- 53: Steuergerät

## Patentansprüche

1. Vorrichtung zum Herstellen und versandfertigen Bereitstellen von Kartonpackungen aus Faltkartons (10) für jeweils eine Mehrzahl von Gegenständen, insbesondere von als Packungsgruppe (19) formierten Gebindepackungen (12), die im Bereich einer Packstation (21) in den seitwärts offenen Faltkarton (10) einführbar sind, wobei der gefüllte Faltkarton (10) entlang einer geradlinigen, horizontalen Bewegungsbahn aufeinanderfolgend einer Schließstation (25) und einer Palettierstation (29) zuführbar und in dieser auf einer Kartonaufnahme (32) absetzbar sind zur Übergabe an eine seitwärts neben der Kartonaufnahme (32) positionierte Palette (11) durch einen in der Palettierstation (29) angeordneten Portalroboter (37), **gekennzeichnet durch** folgende Merkmale:
a) zu beladende, leere Paletten (11) sind quer zur Zuförderrichtung des Kartons (10) im Bereich der Palettierstation (29) bewegbar,
b) die leeren Paletten (11) sind in einer Zuförderebene unterhalb der Kartonaufnahme in eine Beladestellung neben der Kartonaufnahme (32) verschiebbar,
c) nach Beladung der Palette (11) ist diese in derselben Richtung aus der Palettierstation (29) herausbewegbar.

2. Vorrichtung nach Anspruch 1, **dadurch gekennzeichnet, dass** die leeren Paletten (11) auf schienenartigen Unterlagen (51) unterhalb der Kartonaufnahme (32) in die Beladeposition neben der Kartonaufnahme (32) und als beladene Palette (11) aus der Beladestellung in derselben Bewegungsrichtung bewegbar ist.

3. Vorrichtung nach Anspruch 1 oder 2, **gekennzeichnet durch** folgende Merkmale:
a) der Portalroboter (37) weist einen auf- und abbewegbaren Hubkopf (38) zum Erfassen jeweils eines Kartons auf,
b) der Hubkopf (38) ist an einem Tragarm (39) des Portalroboters (37) angeordnet und in dessen Längsrichtung verfahrbar,
c) der Tragarm (39) ist an einer Tragsäule (43) auf- und abbewegbar,
d) die Tragsäule (43) ist im Bereich der Palettierstation (29) an einem unteren Tragbalken (47) und an einem oberen Tragbalken (48) entlang einer geradlinigen Bewegungsbahn neben den zu beladenden Paletten (11) bis in den Bereich der Kartonaufnahme (32) verfahrbar.

## Claims

1. Apparatus for producing and preparing for dispatch packaging boxes from folding boxes (10) for in each case a plurality of objects, in particular bundle packs (12) which are formed as a pack group (19) and can be inserted into the sideways open folding box (10) in the region of a packing station (21), it being possible for the filled folding box (10) to be fed along a straight, horizontal movement path successively to a closing station (25) and a palleting station (29) and to be placed in the latter on a box receptacle (32) for transfer to a pallet (11) which is positioned laterally next to the box receptacle (32) by a portal robot (37) which is arranged in the palleting station (29), **characterized by** the following features:
a) empty pallets (11) to be loaded can be moved transversely with respect to the conveying direction of the box (10) in the region of the palleting station (29),
b) the empty pallets (11) can be displaced in a conveying plane below the box receptacle into a loading position next to the box receptacle (32),
c) after loading of the pallet (11), the latter can be moved in the same direction out of the palleting station (29).

2. Apparatus according to Claim 1, **characterized in that** the empty pallets (11) can be moved on rail-like supports (51) below the box receptacle (32) into the loading position next to the box receptacle (32), and can be moved as a loaded pallet (11) out of the loading position in the same movement direction.

3. Apparatus according to Claim 1 or 2, **characterized by** the following features:
a) the portal robot (37) has a lifting head (38) which can be moved up and down for gripping in each case one box,
b) the lifting head (38) is arranged on a carrying arm (39) of the portal robot (37) and can be moved in its longitudinal direction,
c) the carrying arm (39) can be moved up and down on a loadbearing column (43),
d) the loadbearing column (43) can be moved in the region of the palleting station (29) on a lower carrying beam (47) and on an upper carrying beam (48) along a straight movement path, next to the pallets (11) to be loaded, into the region of the box receptacle (32).

## Revendications

1. Dispositif de fabrication et de préparation à l'expédition d'emballages de carton à partir de cartons pliants (10) pour chaque fois une pluralité d'objets, en particulier d'emballages de fût métallique (12) formés en un groupe d'emballage (19), qui peuvent être introduits dans le carton pliant ouvert latéralement (10) dans la région d'une station d'emballage (21), dans lequel le carton pliant rempli (10) peut être envoyé, le long d'une trajectoire horizontale rectiligne, successivement à une station de fermeture (25) et à une station de palettisation (29) et peut être déposé dans celle-ci sur un support de cartons (32) en vue de son transfert sur une palette (11) positionnée latéralement à côté du support de cartons (32) au moyen d'un robot portique (37) disposé dans la station de palettisation (29), **caractérisé par** les caractéristiques suivantes:
a) des palettes vides à charger (11) sont déplaçables dans la région de la station de palettisation (29), transversalement à la direction d'arrivée du carton (10),
b) les palettes vides (11) sont déplaçables dans une position de chargement à côté du support de cartons (32) dans un plan d'arrivée en dessous du support de cartons,
c) après le chargement de la palette (11), celle-ci peut être évacuée dans la même direction hors la station de palettisation (29).

2. Dispositif selon la revendication 1, **caractérisé en ce que** les palettes vides (11) sont déplaçables sur des supports en forme de rails (51) en dessous du support de cartons (32) dans la position de chargement à côté du support de cartons (32) et ensuite comme palette chargée (11) dans la même direction de déplacement à partir de la position de chargement.

3. Dispositif selon la revendication 1 ou 2, **caractérisé par** les caractéristiques suivantes:
a) le robot portique (37) présente une tête de levage (38) apte à monter et descendre pour saisir chaque fois un carton,
b) la tête de levage (38) est disposés sur un bras porteur (39) du robot portique (37) et est déplaçable dans la direction longitudinale de ce dernier,
c) le bras porteur (39) est apte à monter et descendre sur une colonne de support (43),
d) la colonne de support (43) est déplaçable le long d'une trajectoire rectiligne à côté des palettes à charger (11) jusque dans la région du support de cartons (32), sur une poutre de support inférieure (47) et sur une poutre de support supérieure (48) dans la région de la station de palettisation (29).
